# EUROPÄISCHE PATENTSCHRIFT

(11) **EP 3 870 420 B1**
(45) Veröffentlichungstag und Bekanntmachung des Hinweises auf die Patenterteilung: **18.12.2024**
(21) Anmeldenummer: 20797669.7
(22) Anmeldetag: 30.09.2020
(51) Int. Cl.: B29C 45/14, B29L 31/36

(54) **VERFAHREN ZUM ERZEUGEN EINES MEDIENDICHTEN STOFFVERBUNDS, METALLHÜLSE UND SENSOR MIT EINER SOLCHEN METALLHÜLSE**
METHOD FOR PRODUCING A MEDIA-TIGHT MATERIAL COMPOSITE, METAL SLEEVE AND SENSOR HAVING A METAL SLEEVE OF THIS TYPE
PROCÉDÉ POUR GÉNÉRER UN ASSEMBLAGE DE MATIÈRES ÉTANCHE AUX SUBSTANCES, MANCHON MÉTALLIQUE ET CAPTEUR ÉQUIPÉ D'UN TEL MANCHON MÉTALLIQUE

(30) Priorität: 30.09.2019 DE 102019215065
(43) Veröffentlichungstag der Anmeldung: 01.09.2021
(73) Patentinhaber: Franz Binder GmbH + Co. Elektrische Bauelemente KG, 74172 Neckarsulm (DE)
(72) Erfinder: FINKE, Hans Michael, 74834 Elztal-Auerbach (DE); NEUNER, Andreas Armin, 74906 Bad Rappenau (DE)
(74) Vertreter: Ullrich & Naumann PartG mbB
(86) Internationale Anmeldenummer: PCT/DE2020/200081
(87) Internationale Veröffentlichungsnummer: WO 2021/063456

(56) Entgegenhaltungen:
- EP-A1- 1 172 193
- WO-A1-2019/048325
- DE-A1- 102006 002 539
- JP-A- 2019 119 093
- US-A- 5 641 307

## Beschreibung

Die Erfindung betrifft ein Verfahren zum Erzeugen eines mediendichten Stoffverbunds mit einer metallischen Hülse und einem die Hülse zumindest teilweise umgebenden, gegebenenfalls elektrisch isolierenden Kunststoff, vorzugsweise als Bauteil eines vorzugsweise geschirmten elektrischen Steckers. Des Weiteren betrifft die Erfindung eine metallische Hülse, insbesondere als Bestandteil eines Steckverbinders. Schließlich betrifft die Erfindung einen Steckverbinder und einen Sensor, umfassend die metallische Hülse.

An dieser Stelle sei angemerkt, dass der Festkörper beziehungsweise das Metallteil - nämlich die metallische Hülse - durch unterschiedliche Verfahren von Kunststoff umgeben sein kann. Lediglich beispielhaft sei nachfolgend das Spritzgussverfahren genannt ohne die beanspruchte Lehre darauf einzuschränken.

So gibt es insbesondere zahlreiche Anwendungen zum Einsatz umspritzter Stecker, lediglich beispielhaft sei der Sensorbereich und/oder der Outdoorbereich genannt. Entsprechend dem konkreten Einsatzgebiet werden hohe Anforderungen an die Dichtigkeit solcher Stecker gestellt. Man spricht hier von der Notwendigkeit einer mediendichten Umspritzung. Je nach Schutzart, insbesondere bei IP67, IP68 oder IP69k, kann die Umspritzung der letzte Arbeitsgang vor der Fertigstellung sein. Im Falle einer Undichtigkeit wird die gesamte vorangegangene Wertschöpfung wertlos, ein beispielsweise umspritzter Stecker wird zur Ausschussware. Bei Außenanwendung (Outdoorstecker, HEC) wird die Dichtigkeit noch wichtiger, es ergeben sich erhöhte Anforderungen an die Materialien und/oder Materialverbunde. Dabei kann es sich um die Anforderung erhöhter Dichtigkeit handeln, beispielsweise Schutzart IPX7, IPX8 oder IPX9k, so dass der mediendichte Stoffverbund sogar bei Hochdruck-/Dampfstrahlreinigung hinreichend geschützt ist. Weiter kann es erhöhte Anforderungen hinsichtlich einer maximalen Bewitterungsresistenz geben, etwa gegen UV-Bestrahlung und/oder Beregnung. Die Patentschriften US 5 641 307 A und JP 2019 119093 A beschreiben Verfahren zum Erzeugen eines mediendichten Stoffverbunds.

Aus der Praxis ist es bekannt, dass sich mediendichte Umspritzungen bei spritzfrischen Teilen gut realisieren lassen. Altern jedoch die Teile, so entstehen aufgrund von Schrumpfungen Spalte in der Grenzschicht zwischen der metallischen Hülse und der Umspritzung. Aufgrund einer hygroskopischen Wirkung dringt durch die Spalte Feuchtigkeit in das Bauteil ein.

Neben den Alterungsprozessen sind unterschiedliche Ausdehnungskoeffizienten des Metalls und des meist aus Kunststoff bestehenden Umspritzungsmaterials für die Rissbildung verantwortlich. Weitere wichtige Einflusskriterien sind die Materialien oder deren Kombination, die Bauteilgeometrien, das Herstellungsverfahren, die Werkzeugauslegung und die entsprechende Prozessführung. Wesentliche Faktoren für ein Versagen von mediendichten Stoffverbunden sind dabei die Spaltbildung und das Auftreten von Mikrorissen in der Kunststoffkomponente, die im Wesentlichen auf mangelnde Haftung zwischen der Metall- und Kunststoffkomponente, aber auch auf mechanische Erstarrungsspannungen zurückzuführen sind.

Der vorliegenden Erfindung liegt daher die Aufgabe zugrunde, ein Verfahren anzugeben, wonach von Kunststoff umgebene Bereiche auch über einen langen Zeitraum hinweg mediendicht sind.

Dies soll insbesondere für die Grenzflächen zwischen dem meist metallischen Bauteil und dem Kunststoff gelten, insbesondere als Bestandteil eines Steckverbinders. Vorzugsweise soll eine riss- und spaltfreie Umspritzung und eine verbesserte Haftung der Metall-Kunststoffverbindung verwirklicht werden. Schließlich soll eine entsprechende Schnittstelle mit einer von Kunststoff umgebenen Metallhülse angegeben werden, der nach dem erfindungsgemäßen Verfahren hergestellt ist.

Das erfindungsgemäße Verfahren löst die voranstehende Aufgabe durch die Merkmale des Anspruchs 1. Danach wird ein mediendichter Stoffverbund mit einer metallischen Hülse hergestellt, insbesondere um Hülsen als Bauteile eines vorzugsweise geschirmten elektrischen Steckers, der beispielsweise Bestandteil eines Sensors sein kann. Erfindungsgemäß werden Oberflächen der durch den Kunststoff kontaktierten Bauteile zur Begünstigung der Haftung des Kunststoffs an den Bauteilen vorbehandelt. Die erfindungsgemäße metallische Hülse sowie der erfindungsgemäße kunststoffumspritzte Steckverbinder lösen diese voranstehende Aufgabe durch die Merkmale der Ansprüche 9 und 10.

Der Erfindung liegt die Idee zugrunde, während des Herstellungsprozesses eine Verbesserung der Benetzung zwischen der metallischen Hülse und dem Kunststoff herzustellen, die aus einer Optimierung von Grenzflächenenergie im Verhältnis zu den Oberflächenenergien bzw. Oberflächenspannungen der jeweiligen Komponenten resultiert. Letztendlich geht es dabei um eine Optimierung des Kontaktwinkels bei der Benetzung.

Bedingt durch eine hinreichend gute Haftung wird die Spaltbildung zwischen der Metalloberfläche und dem Kunststoff auch über einen längeren Einsatz hinweg, auch bei unterschiedlichen Ausdehnungskoeffizienten der Komponenten, wirksam minimiert/vermieden. Für das Produkt ergibt sich der Vorteil, dass der mediendichte Stoffverbund wesentlich robuster wird. Dadurch kann auch unter widrigen Bedingungen eine ausreichende Dichtigkeit gewährleistet werden.

Die beschichtete Hülse einer vormontierten Schnittstelle - insbesondere eines Sensors - wird durch UV-Bestrahlung aktiviert. Auch eine UV-Oberflächenreinigung und/oder -aktivierung mit Sauerstoff oder Ozon als Reaktionspartner ist denkbar und kann zur einer optimierten Benetzung der Oberflächen führen. Im Gegensatz zu chemischen Verfahrenslösungen wie beispielsweise dem Einsatz von Primern sind bei der UV-Bestrahlung keine gesundheitliche Gefahren während der Fertigung zu erwarten. Die Teile können bereits beschichtet angeliefert werden, vorzugsweise mit einer Schicht bestehend aus Nanopartikeln auf Titandioxidbasis. Deshalb ist es beispielsweise nicht erforderlich, Absaugvorrichtungen oder dergleichen in der Fertigung vorzusehen, was die Investitionskosten gering hält. Die bisher übliche manuelle/händische Verarbeitung kann somit unverändert fortgesetzt werden. Etwaige organische Rückstände auf der Hülse, die beim Umspritzen sehr schädlich sind, können nur mit der photokatalytischen Reinigung rückstandslos entfernt werden.

Gemäß einer Ausführungsform wird die Hülse mit Kunststoff umspritzt, beispielsweise mit Polyurethan. Das Umspritzen erfolgt nach der Vorbehandlung und insbesondere direkt im Anschluss an die Vorbehandlung. Da das Ergebnis des Umspritzens stark von der Haftung/Sauberkeit des Kunststoffs auf der Hülse abhängt, ist ein kurzer Zeitraum zwischen Vorbehandlung und Umspritzen vorteilhaft.

Bei den Hülsen kann es sich allgemein um Einlegeteile handeln. Beispielsweise kann es sich auch um ein Gehäuse oder um eine einen Steckverbinder umlaufende Lötschicht handeln, die vorzugsweise mittels integriertem Metall-Kunststoff Spritzgießen "IMKS" hergestellt worden ist. Auch die Umspritzung derartiger Gebilde kann durch die Vorbehandlung wesentlich verbessert werden.

Die Wirkung der Vorbehandlung lässt sich auch durch eine Maximierung der Verzahnung von Steckerhülse und Kunststoffumspritzung steigern. Beispielsweise sei hierzu das Sandstrahlen, die Laserstrukturierung und insbesondere das Nanoscale Sculpturing genannt.

Alternativ zur Umspritzung kann die Hülse auch mit Kunststoff umgossen oder sintertechnisch mit Kunststoff ummantelt werden. Durch die Vorbehandlung kann auch hier die Haftung optimiert und die Bildung von Spalten und/oder Rissen reduziert werden.

In vorteilhafter Weise kann die Hülse zylindrisch sein. Der Stecker umfasst entsprechend eine Steckerhülse. Diese Steckerhülse kann über einen Kontaktbereich hinweg zumindest teilweise im direkten Kontakt zu dem Kunststoff stehen, wobei der Kontaktbereich vorbehandelt werden kann.

Bei der Vorbehandlung der Steckerhülse kann es sich um eine mechanische und/oder chemische und/oder physikalische Vorbehandlung handeln. Wesentlich kann dabei sein, dass der Prozess der Vorbehandlung die Haftung zwischen dem Metall und dem Kunststoffmaterial begünstigt.

Die Vorbehandlung erwirkt auch dann eine signifikante Verbesserung der Dichtigkeit, wenn bereits eine Optimierung der Geometrie oder ähnliche konstruktive Maßnahmen umfassen, etwa ein Vorsehen von einer oder mehreren umlaufenden Nuten als Labyrinth für das Medium, dessen Eindringen es zu vermieden gilt. Auch in Kombination mit einer anderen geometrischen Ausgestaltung bzw. weiteren Komponenten erreicht die Vorbehandlung deutliche Verbesserungen. Beispielsweise sei genannt ein Schrumpfschlauch, der vor der Umspritzung auf den metallischen Festkörper aufgebracht ist, oder ein O-Ring, der in eine Nut der metallischen Hülse eingebracht wurde, bevor dieses Gebilde dann umspritzt wird.

Die Vorbehandlung ersetzt hinsichtlich der Optimierung der Benetzung verschiedene Verfahren, insbesondere die üblicherweise verwendeten Haftvermittler/Primer, die spezifisch an das verwendete Umspritzungsmaterial angepasst sind, insbesondere an Polyurethan als Umspritzungsmaterial.

Eine weitere, ergänzende Variante der Vorbehandlung kann im Rahmen einer Prozessoptimierung erfolgen, etwa in Gestalt einer Vorerwärmung der titandioxidbeschichteten, metallischen Hülse vor dem Umspritzen.

Die Vorbehandlung basiert auf dem Verfahren der Photokatalyse und kann durch die UV-Bestrahlung die Reinigung der Oberfläche aufgrund der photokatalytischen Selbstreinigung sowie die Bildung einer Wasserschicht umfassen. Auf diese Weise kann eine Hydrophilierung der Oberfläche realisiert werden.

Vorzugsweise kann das Ziel der Vorbehandlung eine Verbesserung der Benetzung zwischen der Oberfläche des ummantelten Bauteils und der Ummantelung sein, resultierend aus einer Optimierung und insbesondere Reduktion der Grenzflächenenergie in der Grenzfläche des zu ummantelnden Bauteils und dem Material der Ummantelung gegenüber der Summe der Oberflächenenergien oder Oberflächenspannungen der Oberfläche des zu ummantelnden Materials und der Ummantelung. Insbesondere kann dadurch ein Kontaktwinkel zwischen einer Oberfläche des zu ummantelnden Bauteils - beispielsweise einer metallischen Oberfläche - und dem zur Ummantelung verwendeten Kunststoff verringert werden.

In Bezug auf die ummantelte metallische Hülse ist wesentlich, dass diese Bestandteil eines Steckverbinders oder eines Sensors sein kann. Das Konstrukt aus metallischer Hülse und Ummantelung erfolgt nach einem Verfahren mit Merkmalen wie zuvor erörtert.

Gleiches gilt für einen erfindungsgemäßen Sensor (Schnittstelle), der eine ummantelte metallische Hülse, insbesondere einen Steckverbinder entsprechend den voranstehenden Ausführungen, umfassen kann.

Im Lichte der voranstehenden Ausführungen wird deutlich, dass durch die UV-Bestrahlung nicht nur die oben beschriebene Benetzung verbessert wird. Vielmehr wird als Ergebnis einer photokatalytischen Verbrennung ein Reinigungseffekt erzielt.

Die so vorbehandelte Oberfläche ermöglicht, dass nach dem Ummanteln eine hinreichend gute Haftung zwischen der Metalloberfläche und dem Ummantelungsmaterial entsteht. Die Behandlung der Hülse kann von außen und/oder von innen erfolgen. Auch die Aktivierung durch UV-Licht kann von innen und/oder von außen erfolgen.

Das zur Anwendung kommende Ummantelungsverfahren kann das sogenannte Heißspritzverfahren im Rahmen eines Kunststoffspritzgusses sein. Verguss und Sintern kommen ebenso in Frage, je nach Bedarf.

Die Vorbehandlung bewirkt ferner, dass die Fertigung einfach, robust und zugleich höchst zuverlässig vonstattengehen und der Ausschuss signifikant verringert werden kann. In fertigungstechnischer Hinsicht ist es von Vorteil, wenn das Verfahren in den Fertigungsprozess implementierbar ist, nämlich in einen bestehenden Fertigungs-/ Montageablauf. Es ist zwingend darauf zu achten, dass die Taktzeit nicht verringert wird. Die für die Aktivierung durch UV-Licht benötigte Belichtungszeit kann kleiner gewählt werden als der Fertigungstakt, so dass sich die Ausbringung nicht verringert.

Außerdem bringt das Verfahren keine weiteren Kosten in Bezug auf Arbeitsschutzmaßnahmen in der Fertigung mit sich. Das Verfahren lässt sich besonders einfach in einer bestehenden Fertigung implementieren. Angelieferte Metallteile, insbesondere metallische Festkörper, nämlich Hülsen in Gestalt von Schüttgut, das von externen Lieferanten angeliefert wird, können wie gehabt montiert werden. Vor der eigentlichen Umspritzung kann inline eine UV-Bestrahlung erfolgen. Ein Durchgangsloch in der Hülse ist hilfreich, um auch eine Bestrahlung im kritischen inneren Teilbereich (Beugung) der Hülse zu gewährleisten. Die UV-Bestrahlung benötigt weniger als 100 Sekunden. Auch längere Bestrahlungszeiten sind bezüglich der Aktivierung nicht schädlich, aber aus fertigungstechnischen Gründen auch nicht erwünscht. Daraufhin kann je nach Bedarf überprüft werden, ob die Vorbehandlung die gewünschte Wirkung entfaltet hat. Danach kann der Festkörper - auch Spritzling genannt - in das Umspritzungswerkzeug gelegt und umspritzt und anschließend abgelegt werden. Dieser Vorgang wiederholt sich mit der UV-Bestrahlung des nächsten Spritzlings und dem entsprechenden Einlegen.

Da keine Absaugung oder Entsorgung jeglicher Art, wie beispielweise bei Primern (übliche Haftvermittler), die teilweise hochtoxisch sind, erforderlich ist, liegt ferner eine erhöhte Umweltfreundlichkeit des Verfahrens vor. Auch die Aufbringung der Titandioxidschicht beim Lieferanten ist umweltfreundlich.

Es gibt ferner Anforderungen dahingehend, dass die Lagerungsfähigkeit entsprechend hergestellter Bauteile zwei Jahre und mehr betragen muss, ohne dass besondere Schutzmaßnahmen in Bezug auf die Lagerung und den Transport zu ergreifen sind. Dies bedeutet, dass die Wirksamkeit der Vorbehandlung, letztendlich die Haftung zwischen den Komponenten, während des zuvor genannten Zeitraums erhalten bleibt. Wichtiger Bestandteil der Bauteilqualifizierung ist die maximal zulässige Lagerdauer ohne Funktionsverlust beziehungsweise ohne optische Veränderungen. Bei bekannten Verfahren ist die Aktivierung von Metallen meist sehr instabil und somit zeitlich stark begrenzt. Es hat sich gezeigt, dass die Aktivierung durch die UV-Beleuchtung der Effekt der photokatalytischen Selbstreinigung mehrmals in vollem Umfang reproduzierbar ist und wiederhergestellt werden kann. Die technischen Mittel sind vorzugsweise mit den EU-Richtlinien RoHS "Restriction of Hazardous Substances - Beschränkung [der Verwendung bestimmter] gefährlicher Stoffe" und REACH "Registration, Evaluation, Authorisation and Restriction of Chemicals - Registrierung, Bewertung, Zulassung und Beschränkung von Chemikalien" konform.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen
- Fig. 1: in einer schematischen Darstellung ein Ausführungsbeispiel eines kunststoffummantelten Steckverbinders,
- Fig. 2: in einer schematischen Ansicht, den in Figur 1 schematisch dargestellten Steckverbinder im Detail, und
- Fig. 3: in einer schematischen Ansicht ein weiteres Ausführungsbeispiel eines kunststoffummantelten Steckverbinders mit gegossener Abdichtung.

Die Figuren zeigen gemeinsam einen beispielsweise kunststoffumspritzten Steckverbinder, umfassend eine isolierende Umspritzung 1 aus Kunststoff, ggf. Vergussmasse und eine Ausspritzung 1' im Innenraum einer Hülse 2, die eine metallische Oberfläche 3 hat. Die Hülse besteht aus Metall und ist komplett umhüllt mit der Oberfläche 3, die photokatalytische Eigenschaften aufweist. Hierzu ist die Oberfläche 3 über den gesamten Bereich der Hülse 2, das heißt außen und innen, photokatalytisch behandelt, also beispielsweise mit Titandioxid beschichtet, wodurch sich die Benetzbarkeit durch Kunststoff verbessert. Die Oberfläche 3 kann beispielsweise im Tauchverfahren oder auf andere bekannte Weise aufgebracht sein. Die Haftung des spritzgegossenen Kunststoffs der Umspritzung 1 auf der Oberfläche 3, auch im Bereich eines Durchgangslochs 4 in der Hülse 2, ist begünstigt.

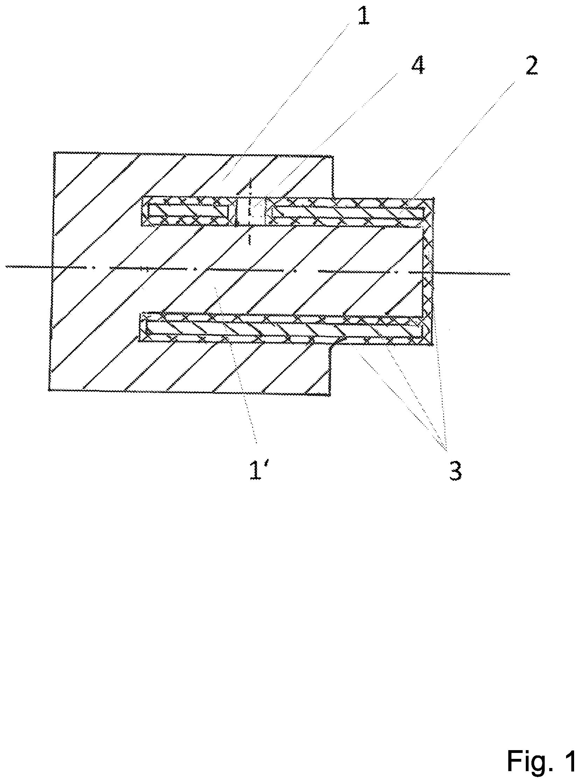

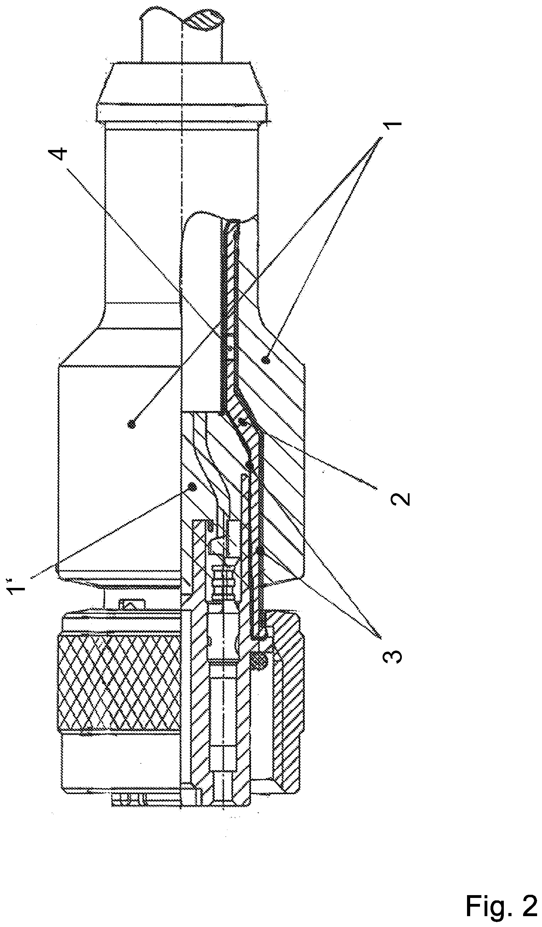

Figur 2 zeigt anhand eines im Detail erkennbaren Steckverbinders die gleichen wesentlichen Merkmale wie Figur 1, so dass sich weitere Ausführungen dazu erübrigen.

In Bezug auf die erfindungsgemäße Lehre sei zu dem Beispiel der spritzgusstechnischen Ummantelung mit der isolierenden Umspritzung 1 folgendes ausgeführt:
Es liegt das Problem zugrunde, dass bei den mit Kunststoff umspritzten Hülsen 2, insbesondere im Rahmen von Steckverbindern, eine mediendichte Verbindung zwischen den Komponenten dauerhaft schwer erzielbar ist. Dies ist auf den Alterungsprozess der Materialen und unterschiedliche thermische Ausdehnungskoeffizienten, sowie Erstarrungsspannungen im Kunststoff zurückzuführen.

Photokatalytische und photohydrophile Titandioxidschichten auf den Oberflächen 3 können genutzt werden, um folgende wichtige Eigenschaften/Effekte hervorzurufen: Reinigung, auch in Bezug auf organische Verschmutzung, Selbstentkeimung Anti-Beschlagwirkung, Hydrophilierung, Gas- und Flüssigkeitsreinigung. Auch photokatalytische Selbstreinigung kommt in Frage.

Das Verfahren zum Erzeugen eines mediendichten Stoffverbunds funktioniert insbesondere bei der prozesssicheren mediendichten Umspritzung 1 mittels Kunststoffspritzguss, insbesondere im Heißspritzverfahren. Ferner kann es als Reinigungsverfahren ebenfalls beim Ausgießen, Kleben, Niederdruckguss oder für sonstige stoffschlüssige Verbindungen Anwendung finden.

Die Lagerung der beschichteten Metallteile beziehungsweise Hülsen 2 ist mehrere Jahre ohne Verluste der Wirksamkeit möglich, da durch die Aktivierung durch die UV-Bestrahlung die photochemischen Effekte reaktiviert werden können. Zur Vorbehandlung der Oberflächen gemäß dem Verfahren kommt insbesondere die Reinigung beziehungsweise Aktivierung von Metallteilen mit titandioxidbeschichteten Oberflächen 3 mittels UV-Bestrahlung - photokatalytische Verbrennung beziehungsweise photoinduzierter Hydrophilie - infrage, insbesondere in geringerem zeitlichen Abstand vor dem Umspritzen mit der Umspritzung 1.

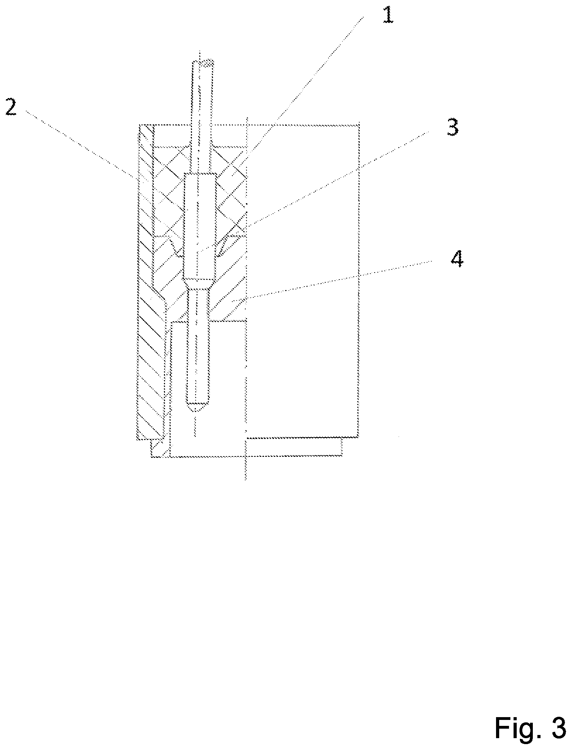

Die Anordnung nach Figur 3 geht von folgendem Problem aus: Zwischen der metallischen Hülse 2 und der Vergussmasse der Umspritzung 1 können sich Spalte bilden, oder es entstehen Micro-Risse an der Grenzfläche beziehungsweise in der Vergussmasse der Umspritzung 1. Zur Vermeidung dieses Problems kann die Vorbehandlung auf die zuvor zu der Spritzgussverarbeitung beschriebene Weise durchgeführt werden.

Die UV-Bestrahlung erfolgt von der Anschlussseite - also gemäß Figur 3 von oben - so dass die inneren photokatalytischen Oberflächen 3 der Hülse 2 und der anschlussseitigen äußeren Oberfläche 3 des Kontaktbereichs aktiviert werden. Auch bei unterschiedlichen Ausdehnungskoeffizienten des Metalls der Hülse 2 und des Kunststoffs der Umspritzung 1 kann die Spaltbildung und das Entstehen von Mikro-Rissen erheblich reduziert oder verhindert werden.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken. Die Erfindung ist im beigefügten Anspruchssatz definiert.

### Bezugszeichenliste

- 1: isolierende Umspritzung
- 1': Ausspritzung
- 2: Hülse
- 3: Oberflächen
- 4: Durchgangsloch

## Patentansprüche

1. Verfahren zum Erzeugen eines mediendichten Stoffverbundsmit einer metallischen Hülse (2) und einem die Hülse (2) zumindest teilweise umgebenden, gegebenenfalls elektrisch isolierenden Kunststoff, vorzugsweise als Bauteil eines vorzugsweise geschirmten elektrischen Steckers, wobei Oberflächen (3) der durch den Kunststoff kontaktierten Bauteile zur Begünstigung der Haftung des Kunststoffs an den Bauteilen vorbehandelt sind, wobei es sich bei der Vorbehandlung um eine mechanische und/oder chemische und/oder physikalische Vorbehandlung handelt, **dadurch gekennzeichnet,**
**dass** die Hülse (2) komplett umhüllt ist mit einer metallischen Oberfläche (3), die photokatalvtische Eigenschaften aufweist,
**dass** die Oberfläche (3) über den gesamten Bereich der Hülse (2), außen und innen, photokatalytisch behandelt ist, und dass die beschichtete Hülse (2) einer vormontierten Schnittstelle durch UV-Bestrahlung aktiviert wird.

2. Verfahren nach Anspruch 1, **dadurch gekennzeichnet, dass** die Hülse mit Kunststoff umspritzt (1) wird.

3. Verfahren nach Anspruch 1, **dadurch gekennzeichnet, dass** die Hülse mit Kunststoff umgossen wird.

4. Verfahren nach Anspruch 1, **dadurch gekennzeichnet, dass** die Hülse sintertechnologisch mit Kunststoff ummantelt wird.

5. Verfahren nach eine der Ansprüche 1 bis 4, **dadurch gekennzeichnet, dass** die Hülse über einen Kontaktbereich zumindest teilweise direkten Kontakt zu dem Kunststoff hat, wobei dieser Kontaktbereich vorbehandelt wird.

6. Verfahren nach einem der Ansprüche 1 bis 5, **dadurch gekennzeichnet, dass** es sich bei der Vorbehandlung um eine mechanische und/oder chemische und/oder physikalische Vorbehandlung handelt.

7. Verfahren nach einem der Ansprüche 5 oder 6, **dadurch gekennzeichnet, dass** die Vorbehandlung eine Reinigung der metallischen Hülsen-Oberfläche(n) (3) umfasst.

8. Verfahren nach einem der Ansprüche 1 bis 7, **dadurch gekennzeichnet, dass** das Ziel der Vorbehandlung eine Verbesserung der Benetzung zwischen der Oberfläche (3) der Hülse und dem Kunststoff ist, resultierend aus einer Optimierung einer Grenzflächenenergie der Grenzfläche, insbesondere einer Optimierung eines Kontaktwinkels zwischen der metallischen Oberfläche (3) und dem Kunststoff gegenüber der Summe der Oberflächenenergien der Oberfläche (3) des mit Kunststoff zu umgebenden Materials und dem Kunststoff ist.

9. Metallische Hülse (2) mit einem die Hülse (2) umgebenden Kunststoff, insbesondere als Bestandteil eines Steckverbinders, **dadurch gekennzeichnet, dass** die Hülse (2) komplett umhüllt ist mit einer metallischen Oberfläche (3), die photokatalytische Eigenschaften aufweist, dass die Oberfläche (3) über den gesamten Bereich der Hülse (2), außen und innen, photokatalytisch behandelt ist, und dass die mechanische Hülse (2) mit dem die Hülse (2) umgebenden Kunststoff nach einem Verfahren nach einem der Ansprüche 1 bis 8 hergestellt ist.

10. Kunststoffumspritzter Steckverbinder, umfassend
eine isolierende Umspritzung (1) aus Kunststoff,
eine metallische Hülse (2) und
vorzugsweise eine Ausspritzung (1') im Innenraum der Hülse,
**dadurch gekennzeichnet,**
**dass** die Hülse (2) komplett umhüllt ist mit einer metallischen Oberfläche (3), die photokatalytische Eigenschaften aufweist,
wobei die Oberfläche (3) über den gesamten Bereich der Hülse (2), außen und innen, photokatalytisch behandelt ist.

11. Sensor, umfassend die mit Kunststoff umgebende metallische Hülse (2) nach Anspruch 9.

## Claims

1. Method for producing a media-tight composite material having a metal sleeve (2) and a plastics material which at least partially surrounds the sleeve (2) and which is where applicable electrically insulating, preferably as a component of a preferably shielded electrical plug, wherein surfaces (3) of the components which are contacted by the plastics material are pretreated in order to promote the adhesion of the plastics material to the components, wherein the pretreatment is a mechanical and/or chemical and/or physical pretreatment,
**characterised in that**
the sleeve (2) is completely surrounded with a metal surface (3) which has photocatalytic properties,
**in that** the surface (3) is treated photocatalytically over the entire region of the sleeve (2), at the outer and inner sides, and **in that** the coated sleeve (2) of a preassembled interface is activated by means of UV radiation.

2. Method according to claim 1, **characterised in that** the sleeve is overmoulded (1) with plastics material.

3. Method according to claim 1, **characterised in that** the sleeve is cast around with plastics material.

4. Method according to claim 1, **characterised in that** the sleeve is covered with plastics material using sintering technology.

5. Method according to any one of claims 1 to 4, **characterised in that** sleeve via a contact region has at least partially direct contact with the plastics material, wherein this contact region is pretreated.

6. Method according to any one of claims 1 to 5, **characterised in that** the pretreatment is a mechanical and/or chemical and/or physical pretreatment.

7. Method according to either claim 5 or claim 6, **characterised in that** the pretreatment comprises a cleaning of the metal sleeve surface(s) (3).

8. Method according to any one of claims 1 to 7, **characterised in that** the objective of the pretreatment is to improve the cross-linking between the surface (3) of the sleeve and the plastic material, resulting from an optimisation of a boundary surface energy of the boundary surface, in particular an optimisation of a contact angle between the metal surface (3) and the plastics material with respect to the sum of the surface energies of the surface (3) of the material which is intended to be surrounded with plastics material and the plastics material.

9. Metal sleeve (2) having a plastics material which surrounds the sleeve (2), in particular as a component of a plug connector, **characterised in that** the sleeve (2) is completely surrounded with a metal surface (3) which has photocatalytic properties, **in that** the surface (3) is photocatalytically treated over the entire region of the sleeve (2) at the outer and inner sides, and **in that** the mechanical sleeve (2) is produced with the plastics material which surrounds the sleeve (2) in accordance with a method according to any one of claims 1 to 8.

10. Plug connector overmoulded with plastics material, comprising
an insulating overmoulding (1) made of plastics material,
a metal sleeve (2) and
preferably an internal moulding (1') in the inner space of the sleeve,
**characterised in that**
the sleeve (2) is completely surrounded with a metal surface (3) which has photocatalytic properties,
wherein the surface (3) is photocatalytically treated at the outer and inner sides over the entire region of the sleeve (2) .

11. Sensor comprising the metal sleeve (2) which is surrounded with plastics material according to claim 9.

## Revendications

1. Procédé pour la production d'un matériau composite étanche aux fluides avec un manchon métallique (2) et une matière plastique entourant au moins partiellement le manchon (2), le cas échéant électriquement isolant, de préférence en tant que composant d'une prise électrique, de préférence blindée, dans lequel des surfaces (3) des composants mis en contact par la matière plastique sont pré-traitées afin de favoriser l'adhérence de la matière plastique aux composants, dans lequel le pré-traitement est un pré-traitement mécanique et/ou chimique et/ou physique,
**caractérisé en ce que**
le manchon (2) est entièrement enveloppé avec une surface métallique (3) qui présente des propriétés photocatalytiques,
la surface (3) est traitée de manière photocatalytique sur l'ensemble du manchon (2), à l'extérieur et à l'intérieur et le manchon (2) revêtu est activé par un rayonnement UV à l'aide d'une interface pré-montée.

2. Procédé selon la revendication 1, **caractérisé en ce que** le manchon est surmoulé (1) avec une matière plastique.

3. Procédé selon la revendication 1, **caractérisé en ce que** le manchon est enrobé avec une matière plastique.

4. Procédé selon la revendication 1, **caractérisé en ce que** le manchon est enveloppé par une technique de frittage avec une matière plastique.

5. Procédé selon l'une des revendications 1 à 4, **caractérisé en ce que** le manchon présente, par l'intermédiaire d'une zone de contact, un contact au moins partiellement direct avec la matière plastique, dans lequel cette zone de contact est pré-traitée.

6. Procédé selon l'une des revendications 1 à 5, **caractérisé en ce que** le pré-traitement est un pré-traitement mécanique et/ou chimique et/ou physique.

7. Procédé selon l'une des revendications 5 ou 6, **caractérisé en ce que** le pré-traitement comprend un nettoyage des surfaces métalliques (3) du manchon.

8. Procédé selon l'une des revendications 1 à 7, **caractérisé en ce que** l'objectif du pré-traitement est une amélioration du mouillage entre la surface (3) du manchon et la matière plastique, qui résulte d'une optimisation d'une énergie de la surface limite, plus particulièrement d'une optimisation d'un angle de contact entre la surface métallique (3) et la matière plastique, par rapport à la somme des énergies de contact de la surface (3) du matériau à entourer avec la matière plastique et de la matière plastique.

9. Manchon métallique (2) avec une matière plastique entourant le manchon (2), plus particulièrement en tant que composant d'un connecteur enfichable, **caractérisé en ce que** le manchon (2) est entièrement enveloppé avec une surface métallique (3) qui présente des propriétés photocatalytiques, **en ce que** la surface (3) est traitée de manière photocatalytique sur l'ensemble du manchon, à l'extérieur et à l'intérieur, et **en ce que** le manchon mécanique (2) avec la matière plastique (2) entourant le manchon (2) est fabriqué selon un procédé selon l'une des revendications 1 à 8.

10. Connecteur enfichable surmoulé avec une matière plastique, comprenant un surmoulage isolant (1) en matière plastique, un manchon métallique (2) et de préférence une pulvérisation (1') à l'intérieur du manchon,
**caractérisé en ce que**
le manchon (2) est entièrement enveloppé avec une surface métallique (3), qui présente des propriétés photocatalytiques,
dans lequel la surface (3) est traitée de manière photocatalytique sur l'ensemble du manchon (2), à l'extérieur et à l'intérieur.

11. Capteur comprenant le manchon métallique (2) entouré avec une matière plastique selon la revendication 9.
